# EUROPEAN PATENT SPECIFICATION

(11) **EP 4 389 486 B1**
(45) Date of publication and mention of the grant of the patent: **27.08.2025**
(21) Application number: 23217154.6
(22) Date of filing: 15.12.2023
(51) Int. Cl.: B60K 17/356, B60K 6/365, B60K 6/405, B60K 6/52, B60K 6/54, B60K 7/00, B60K 6/48, B60K 17/04, B60K 17/28, B60K 17/30, B60K 17/354, F16H 57/04, B60K 23/04

(54) **VEHICLE**
FAHRZEUG
VÉHICULE

(30) Priority: 23.12.2022 JP 2022206734
(43) Date of publication of application: 26.06.2024
(73) Proprietor: KANZAKI KOKYUKOKI MFG. CO., LTD., Hyogo 661-0981 (JP)
(72) Inventor: IWAKI, Koji, Hyogo, 661-0981 (JP); MOTOOKA, Ryo, Hyogo, 661-0981 (JP); YOSHIOKA, Terunobu, Hyogo, 661-0981 (JP)
(74) Representative: Isarpatent

(56) References cited:
- DE-A1- 102017 202 692
- US-A1- 2016 137 044
- US-A1- 2018 148 089
- US-B2- 9 895 970

## Description

### TECHNICAL FIELD

The present invention relates to a traveling vehicle such as a tractor for an agricultural works or a wheel loader for a civil engineering works.

### BACKGROUND ART

Conventionally, in a tractor for the agricultural work, which is an example of a traveling vehicle, a so-called hybrid type that improves drive efficiency by using both power of an engine and power of an electric motor has been known (see Patent Documents 1 and 2, for example). In the tractor of Patent Document 1, such a configuration is adopted that left and right rear wheels and front and rear four wheels are driven by rotation power of an electric motor. In a case of insufficient torque of the electric motor, the rotation power of the engine is supplemented. In the tractor of Patent Document 2, such a configuration is adopted that left and right front wheels are driven by the rotation power of the electric motor in the case of the four-wheel drive mode.

### PRIOR ART DOCUMENT

### PATENT DOCUMENT

Patent Document 1: Japanese Unexamined Patent Application Publication No. 2003-9607
Patent Document 2: Japanese Unexamined Patent Application Publication No. 2004-350475

Further, document DE 10 2017 202692 A1 describes a transmission arrangement for the controllable distribution of a drive torque from an input element to two output elements, the transmission arrangement being assigned to a secondary axle of a drive train of a temporarily four-wheel-drive motor vehicle. In details, said document discloses a vehicle in which an internal combustion engine, a main drive wheel, and a pair of sub drive wheels are supported on a machine body, and the internal combustion engine drives the main drive wheel through a transmission mechanism, the vehicle comprising: an electric motor and a planetary gear mechanism that are provided inside an axle case that supports the pair of sub drive wheels, wherein in three elements of the planetary gear mechanism, a first element is interlockingly connected to the electric motor, a second element is interlockingly connected to the pair of sub drive wheels, and a third element is drivingly connected to an output side of the traveling transmission mechanism.

Document US 2016/137044 A1 describes an electrical drive arrangement for driving a motor vehicle.

### SUMMARY OF INVENTION

### TECHNICAL PROBLEM

However, in the conventional configuration, since the left and right front wheels, the left and right rear wheels, or the front and rear four wheels are driven by the electric motor alone in some cases, a large-sized electric motor having a sufficient output is required for various works and traveling. For this reason, there were problems that it is difficult to downsize the electric motor, a manufacturing cost increases, and mountability on a traveling vehicle is poor.

### SOLUTION TO PROBLEM

The present invention has a technical object to provide a traveling vehicle which is improved in view of the aforementioned circumstances.

The present invention is a traveling vehicle configured such that an internal combustion engine, a main drive wheel, and a pair of sub drive wheels are supported on a traveling machine body, and the internal combustion engine drives the main drive wheel through a traveling transmission mechanism, in which an electric motor and a planetary gear mechanism are provided inside an axle case which supports the pair of sub drive wheels, in three elements of the planetary gear mechanism, a first element is interlockingly connected to the electric motor, a second element is interlockingly connected to the sub drive wheel, and a third element is interlockingly connected to an output side of the traveling transmission mechanism.

In the traveling vehicle of the present invention, the axle case is supported on the traveling machine body so as to be swingable around a center pin disposed at an intermediate part in a vehicle width direction, the pair of sub drive wheels is attached so as to be movable up and down, and each of a pair of electric motors, included in the electric motor, and each of a pair of planetary gear mechanisms, included in the planetary gear mechanism, are accommodated in the axle case by being distributed to both left and right sides with the center pin interposed therebetween.

In the traveling vehicle of the present invention, a through hole communicating from an inside to an outside of the axle case may be formed inside the center pin, and a wiring cable for each of the electric motors may be drawn out to the outside of the axle case via the through hole.

In the traveling vehicle of the present invention, oil may be stored in the axle case, and the axle case may be connected to an oil cooler mounted on the traveling machine body so that the stored oil can flow freely via the through hole of the center pin.

In the traveling vehicle of the present invention, it may be so configured that a power take-out portion for the pair of sub drive wheels is provided on an output side of the traveling transmission mechanism, and the power take-out portion includes a switching mechanism for switching a drive form of the main drive wheel and the pair of sub drive wheels among drive forms which drive only the pair of sub drive wheels, drive all-wheel, and drive only the main drive wheel, and when the switching mechanism is switched to the driving state which drives only the pair of sub drive wheels, power transmission from the traveling transmission mechanism to the third element of the planetary gear mechanism is disconnected in a braking state, and the pair of sub drive wheels is rotated and driven by drive of the electric motor.

In the traveling vehicle of the present invention, the pair of sub drive wheels may be configured to be steerable by an operation of an operator, and a control device of the electric motor may be configured to differentially cause the pair of sub drive wheels to be driven on the basis of a steering signal of the control device.

### ADVANTAGEOUS EFFECTS OF INVENTION

According to the present invention, when the pair of sub drive wheels are rotated and driven, a part of the power of the internal combustion engine can be used to share a drive load with the electric motor, so that the electric motor can be downsized, whereby a size and a weight can be reduced. Moreover, each of the electric motors may have a capacity enough to be capable of individually driving the pair of sub drive wheels. Therefore, the electric motor can be accommodated in the axle case without difficulty, and the durability of the electric motor can be improved by protecting the electric motor from muddy water or the like. Accordingly, the downsizing of the internal combustion engine can also be realized, and an environment-friendly traveling vehicle can be provided.

### BRIEF DESCRIPTION OF DRAWINGS

FIG. 1 is a schematic side view of an agricultural tractor as an example of a traveling vehicle according to an embodiment;
FIG. 2 is a skeleton diagram illustrating a power transmission system of the tractor;
FIG. 3 is a skeleton diagram illustrating a power transmission system in a front axle case;
FIG. 4 is a developed cross-sectional view illustrating a structure in a periphery of a front axle case and a front wheel;
FIG. 5 is an enlarged sectional plan view of the front axle case; and
FIG. 6 is an enlarged sectional side view of the front axle case.

### DESCRIPTION OF EMBODIMENTS

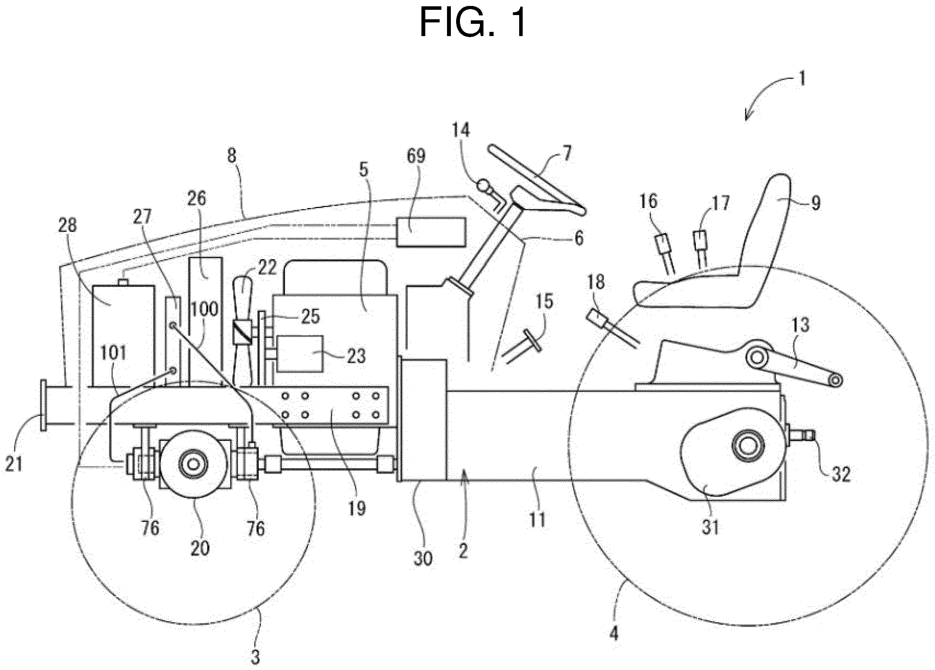

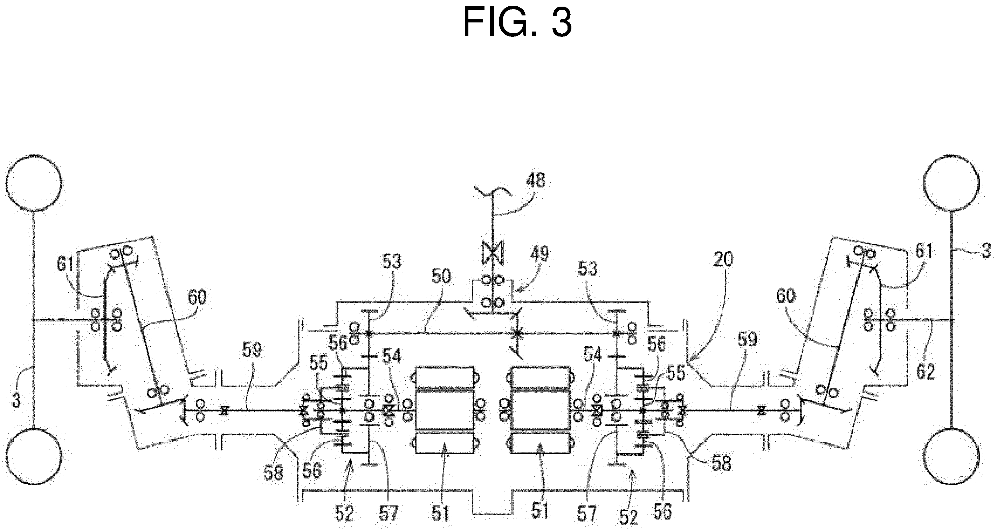

Hereinafter, an embodiment which embodies the present invention will be described on the basis of the drawings (FIGS. 1 to 6). In the embodiment, the present invention is applied to a tractor 1 as a traveling vehicle. In the following explanation, terms such as "front and rear" and "left and right" are used to specify a direction with a traveling direction of the tractor 1 as the front and rear as a reference for specification of the direction. It is needless to say that these terms are used for convenience of explanation and do not limit the technical scope of the present invention.

First, an overview of the tractor 1 will be described with reference to FIGS. 1 to 3. The tractor 1 of the embodiment includes a traveling machine body 2 supported by a pair of left and right sub drive wheels 3 and a pair of left and right main drive wheels 4. The main drive wheels are non-steerable wheels that support a side of the vehicle where vehicle weight distribution is large, and in this embodiment, refer to the rear wheels 4. Similarly, the sub drive wheels are steerable wheels that support a side of the vehicle where the vehicle weight distribution is small, and in this embodiment, refer to the front wheels 3. An internal combustion engine 5 and a steering column 6 having a steering wheel 7 are provided on a front side of the traveling machine body 2. The internal combustion engine 5 is covered with a bonnet 8. Regarding a capacity of the internal combustion engine 5, it has a degree of rotating the rear wheels 4 on the side of the larger weight distribution, and a capacity of an electric motor 51, which will be described later, has a degree of rotating the front wheels 3 on the side of the smaller weight distribution.

A driving seat 9 on which an operator is seated is disposed behind the steering wheel 7. It is configured such that, when the operator sitting on the driving seat 9 rotationally moves/operates the steering wheel7, steering angles of the left and right front wheels 3 are changed in accordance with a rotational-movement operation amount. On a rear part of the traveling machine body 2, a transmission case 11 incorporating a traveling transmission mechanism 10 for driving the front and rear wheels 3 and 4 by appropriately shifting power of the internal combustion engine 5 and a work transmission mechanism 12 for driving a agricultural implement are mounted. A hydraulic elevation mechanism 13 for elevating up/down a agricultural implement (not shown) such as a scraper, a rake, or a cultivator is disposed on an upper surface of a rear part of the transmission case 11. The agricultural implement is connected to the rear part of the transmission case 11 via a link mechanism.

On the side of the steering column 6, a forward/backward-travel switching lever 14 for a switching operation of the traveling direction of the traveling machine body 2 between forward and backward traveling, and a clutch pedal 15 for connecting and disconnecting operations of an output from the internal combustion engine 5 to the traveling transmission mechanism 10 are disposed. On the side of the steering column 6, a pair of brake pedals (not shown) for an individual braking operation of the left and right rear wheels 4, an accelerator pedal (not shown) for setting a rotation speed of the internal combustion engine 5 and the like are also disposed. In a periphery of the driving seat 9, a four-wheel drive switching lever 16 for a switching operation of drive modes of the front and rear four wheels 3, 4 and a PTO speed selection lever 17 for a switching operation of the output of a PTO shaft 32, which will be described later, in plural stages and neutral are disposed. A parking brake lever 18 for a maintaining operation of the both left and right rear wheels 4 in a braking state is disposed on a front of the four-wheel drive switching lever 16. Although not shown, a main speed-change pedal for stopping the traveling machine body 2 and for a continuously changing operation of a vehicle speed thereof in the traveling transmission mechanism 10, a sub shift lever for setting and maintaining the output and the rotation speed of the traveling transmission mechanism 10 in a predetermined range in accordance with a work state, An agricultural implement control lever for manually changing and adjusting a height position of the agricultural implement connected to the rear of the traveling machine body 2 and the like are also disposed in the periphery of the driving seat 9.

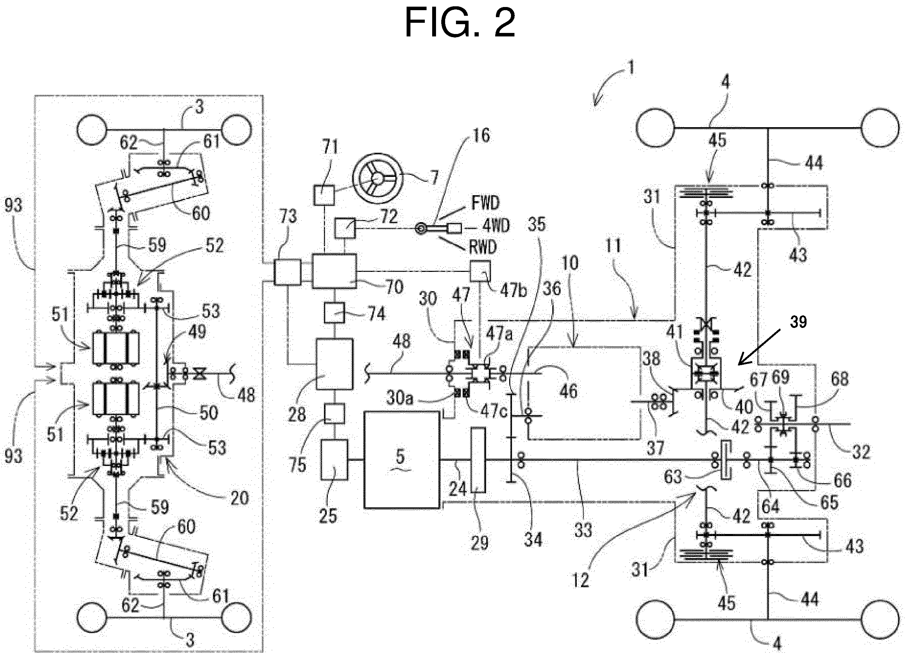

As shown in FIG. 1, the traveling machine body 2 is configured by connecting the transmission case 11 functioning as a rear frame to a front frame 19 having a front bumper 21. A rear end side of the front frame 19 is connected to left and right outer side surfaces of the internal combustion engine 5. A cooling fan 22 is rotatably provided on the front surface side of the internal combustion engine 5. Although not shown, the internal combustion engine 5 also includes a cooling water pump. On a side of the internal combustion engine 5, an alternator 23 (generator) that generates electric power by the power of the internal combustion engine 5 is provided. When the internal combustion engine 5 operates, rotation power is transmitted from a front end side of an engine output shaft 24 (crank shaft, see FIG. 2) to the cooling fan 22 and the cooling water pump via a transmission belt 25, and the rotation power is also transmitted to the alternator 23.

On a front part of the front frame 19, a radiator 26 for water-cooling the internal combustion engine 5 is erected so as to be located on a front surface side of the internal combustion engine 5. By drive of the cooling water pump, cooling water in the radiator 26 is supplied to the internal combustion engine 5 and cools the internal combustion engine 5. On the front part of the front frame 19, an oil cooler 27 for cooling oil and a battery 28 for supplying electric power are provided so as to be located on the front surface side of the radiator 26. Cooling air introduced from the outside of the bonnet 8 is blown against the oil cooler 27 and the radiator 26 by the rotation of the cooling fan 22 and then, flows toward the internal combustion engine 5. The radiator 26, the oil cooler 27, and the battery 28 are covered by a bonnet 8 together with the internal combustion engine 5.

A flywheel housing 30 that houses a flywheel 29 (see FIG. 2) is attached to a rear surface side of the internal combustion engine 5. To the rear surface side of the flywheel housing 30, a front surface side of the transmission case 11 is connected. On a rear part of the transmission case 11, a rear axle case 31 is attached so as to protrude outward in the left-right direction. The left and right rear wheels 4 are rotatably disposed on left and right distal end sides of the rear axle case 31. On the rear surface of the transmission case 11, the PTO shaft 32 for transmitting a PTO drive force to the agricultural implementis provided so as to protrude rearward.

Subsequently, a power transmission system of the tractor 1 will be explained with reference mainly to FIG. 2. The tractor 1 of the embodiment is configured to drive the front wheels 3, the rear wheels 4, and the PTO shaft 32 by transmitting the power of the internal combustion engine 5 to the traveling transmission mechanism 10 and the work transmission mechanism 12 in the transmission case 11. To the engine output shaft 24 provided so as to protrude rearward on the rear surface of the internal combustion engine 5, the flywheel 29 is directly connected. The flywheel 29 and a transmission input shaft 33 are connected to each other via a main clutch (not shown) for engaging and disengaging power. The transmission input shaft 33 is rotatably supported by the transmission case 11 along the machine body front-rear direction. The transmission input shaft 33 is directly connected to the work transmission mechanism 12, is branched from a transmission gear 34 to a shift input gear 35, and is fixed to a shift input shaft 36 of the traveling transmission mechanism 10.

The traveling transmission mechanism 10 includes a continuously variable or stepped transmission device (not shown), and a pinion 38 is fixed to a shift output shaft 37 protruding rearward via the transmission device. On a rear of the traveling transmission mechanism 10, a final reduction-gear mechanism 39 in the rear axle case 31 that transmits rotation power to the left and right rear wheels 4 is disposed. The final reduction-gear mechanism 39 includes a differential input gear 40 meshed with the pinion 38 of the shift output shaft 37, a differential gear case 41 fixed to the differential input gear 40, and a pair of rear-wheel differential output shafts 42 extending in the left-right direction. The left and right rear-wheel differential output shafts 42 are connected to a rear axle 44 via a final gear 43 and the like. The rear wheel 4 is attached to a distal end part of the rear axle 44. On the left and right rear-wheel differential output shafts 42, a brake mechanism 45 is provided. The brake mechanism 45 applies braking to the both left and right rear wheels 4 by simultaneously operating the parking brake lever 18 (see FIG. 1) and the pair of brake pedals. Note that, when turning, if only the brake pedal on an inner side of the turn is depressed, and a braking force corresponding to the depression force is applied to the rear wheel on the inner side of the turn, the vehicle can turn with a further smaller turning radius in addition to operating the steering wheel 7.

A front-wheel output shaft 46 that protrudes forward from the output side of the traveling transmission mechanism 10 and extends parallel to the shift input shaft 36 is also rotatably supported in the transmission case 11. To the front-wheel output shaft 46, a front-wheel propeller shaft 48 extending coaxially with the front-wheel output shaft 46 is connected via a switching mechanism 47 that switches the drive form of the front and rear four wheels 3, 4 among "front-wheel only drive (FWD)", "all (four) wheel drive (4WD)", and "rear-wheel only drive (RWD)". The aforementioned four-wheel drive switching lever 16 is operated by an operator so as to select any one of a "four-wheel drive (4WD) position", a "front-wheel drive (FWD) position", and a "rear-wheel drive (RWD) position" shown in the drawing, the switching mechanism 47 operates so as to realize those driving states.

The switching mechanism 47 of the embodiment is of a clutch type that selectively connects/disconnects the transmission of the rotation power from the internal combustion engine 5 via the traveling transmission mechanism 10 to the front-wheel propeller shaft 48 and thus, to the left and right front wheels 3. The switching mechanism 47 of the embodiment has a clutch shifter 47a that is fitted onto the front-wheel output shaft 46 and the front-wheel propeller shaft 48 non-rotatably and slidably in an axial direction.

The clutch shifter 47a is configured to slide to three predetermined positions by drive of a clutch actuator 47b and to select any one of engagement of the front-wheel propeller shaft 48 with the front-wheel output shaft 46 (four-wheel drive position), disengagement of the front-wheel output shaft 46 and fixing of the front-wheel propeller shaft 48 (front-wheel drive position) non-rotatably, disengagement of the front-wheel output shaft 46 and allowing of free rotation of the front-wheel propeller shaft 48 (rear-wheel drive position). The clutch actuator 47b is of a push-pull type and can drive so as to cause the clutch shifter 47a to select the three positions described above. In the embodiment, the clutch actuator 47b switches and operates the clutch shifter 47a in response to a switching operation of the four-wheel drive switching lever 16. Note that the clutch actuator 47b preferably has electricity as a drive source, but the electricity is not necessarily limiting. For example, a linear solenoid may be used, or an electric pump combined with a hydraulic piston or a pneumatic piston may be used.

As shown in FIG. 2, in the embodiment of the switching mechanism 47, a shifter claw portion 47c is provided on the front end side of the clutch shifter 47a. To the inner surface side of the front part of the flywheel housing 30, a housing claw portion 30a is fixed so as to face the shifter claw portion 47c. When the four-wheel drive switching lever 16 is switched to the front-wheel drive position and the clutch shifter 47a is switched and operated to the front-wheel drive position by the clutch actuator 47b, the clutch shifter 47a is disconnected from the front-wheel output shaft 46, and the shifter claw portion 47c is engaged with the housing claw portion 30a. As a result, the front-wheel propeller shaft 48 is held non-rotatable. When the four-wheel drive switching lever 16 is switched to the four-wheel drive position and the clutch shifter 47a is switched and operated to the four-wheel drive position by the clutch actuator 47b, the engagement between the shifter claw portion 47c and the housing claw portion 30a is released, and the front-wheel output shaft 46 and the front-wheel propeller shaft 48 are connected so as to be integrally rotatable by the clutch shifter 47a. As a result, the rotation power of the front-wheel output shaft 46 is transmitted to the front-wheel propeller shaft 48. When the four-wheel drive switching lever 16 is switched to the rear-wheel drive position and the clutch shifter 47a is switched to the rear-wheel drive position by the clutch actuator 47b, the clutch shifter 47a is disconnected from the front-wheel propeller shaft 48, and the front-wheel propeller shaft 48 becomes freely rotatable.

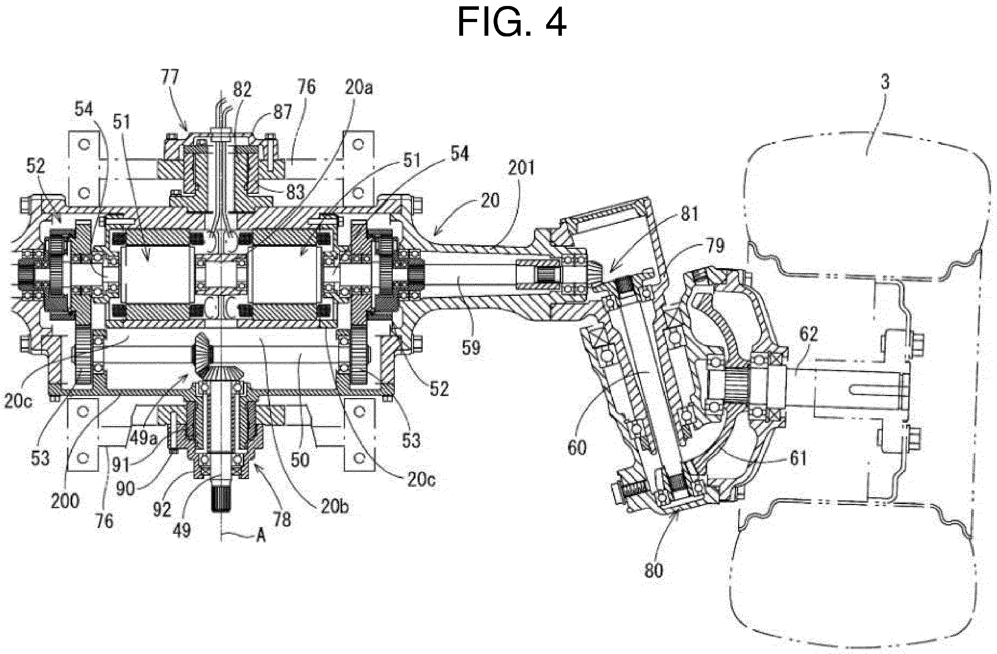

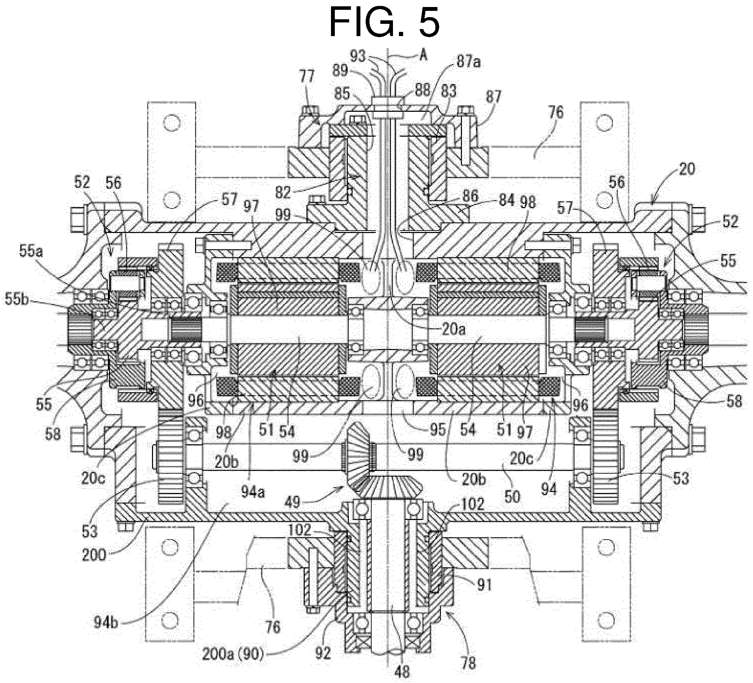

A front end side of the front-wheel propeller shaft 48 is connected to an input shaft 49 at a laterally intermediate part of a front axle case 20 disposed on a lower side of a front part of the traveling machine body 2. As shown in FIGS. 4 and 5, the input shaft 49 is rotatably supported by bearings in a cylinder portion 200a provided on an outer side surface of a cover 200 which closes a rear-surface opening of the front axle case 20 with an axial direction thereof following the longitudinal direction of the machine body.

In the front axle case 20, as will be described later, a space other than a defined motor accommodating chamber 94a is a gear accommodating chamber 94b. That is, a counter shaft 50 to which power is transmitted from the input shaft 49 via a bevel gear mechanism 49a is rotatably supported by bearings on the rear side of the cover 200 so as to follow the left-right direction, and is inserted from the rear-surface opening of the front axle case 20 and is located inside the front axle case 20. Power distributing gears 53 for transmitting power to each of ring gears 57, 57 of a planetary gear mechanism 52, which will be described later, are fixed to both left and right end parts of the counter shaft 50.

A pair of left and right electric motors 51 for individually driving the both left and right front wheels 3 are accommodated in the motor accommodating chamber 94a defined and formed in a front center part of the front axle case 20, and the planetary gear mechanisms 52 for drivingly connecting the electric motors 51 to corresponding left and right front-wheel differential output shafts 59 are accommodated in the front axle case 20 on the left and right outer sides of the motor accommodating chamber 94a. An axle housing201, which rotatably supports the front-wheel differential output shaft 59 therein, is fixed to both outer side ends of the front axle case 20.

The left and right electric motors 51 are respectively accommodated in two spaces defined side by side in a center part of the front axle case 20 so as to be distributed to both left and right sides with respect to a virtual extension line A (a center position in the vehicle width direction) of the front-wheel propeller shaft 48. A pear of motor shafts 54 protruding outward in the left-right direction from the left and right electric motors 51 are arranged concentrically (on the axis of left and right front-wheel differential output shafts 59, which will be described later). The corresponding planetary gear mechanisms 52 are disposed on the left and right outer sides of each of the motor shaft 54, 54, respectively. Therefore, combinations of the left and right electric motors 51 and the planetary gear mechanisms 52 are disposed by being distributed to the both left and right sides with a virtual extension line A (the center position in the vehicle width direction) of the front-wheel propeller shaft 48 interposed therebetween. In other words, the combinations of the left and right electric motors 51 and the planetary gear mechanisms 52 are disposed symmetrically with respect to a laterally intermediate part of the front axle case 20, which is on the virtual extension line A of the front-wheel propeller shaft 48.

The both left and right motor accommodating chambers 94a are provided symmetrically with respect to a partition wall 20a by extending a peripheral wall 20b having a cylindrical inner surface laterally outward from the partition wall 20a formed on a front part side of the laterally intermediate part in the front axle case 20. The electric motor 51 is of a type in which a heat generation spot is cooled by oil, and is configured to be usable for cooling by introducing lubricant oil stored in the gear accommodating chamber 94b of the front axle case 20 into the motor accommodating chamber 94a. That is, the both left and right motor accommodating chambers 94a communicate with a common opening 86 formed in a front surface of the laterally intermediate part of the front axle case 20 via the through hole of the partition wall 20a. At a center part of the left and right cylindrical peripheral walls 20b, a rear-part communication port 95 communicating with the both motor accommodating chambers 94a is formed. A side communication port 96 communicating with the corresponding motor accommodating chamber 94a is formed in a motor cover 20c which defines the motor accommodating chamber 94a by covering outer side openings of the left and right cylindrical peripheral walls 20b.

Each of the electric motors 51 in each of the motor accommodating chambers 94a includes a ring-shaped stator 98 fixed to the inner surface of the cylindrical peripheral wall 20b, and a rotor 97 disposed inside the stator 98 and having the motor shaft 54 inserted through the center part thereof. The inner end of each of the motor shafts 54 is rotatably supported by bearings by the partition wall 20a, respectively, and the outer end thereof is supported by bearings by the motor cover 20c. The electric motor 51 is accommodated in the motor accommodating chamber 94a in a posture that the motor shaft 54 protrudes outward in the left-right direction from the motor cover 20c. The stator 98 includes a plurality of coils as usual.

A rotation speed sensor (not shown) of the motor shaft 54 is also provided. Wiring cables 93 electrically connected to the coils and sensors provided in the left and right electric motors 51 are collected in the common opening 86 via a concentration pocket portion 99 provided in the partition wall 20a, respectively.

Each of the left and right planetary gear mechanisms 52 is constituted by a sun gear 55 driven by the motor shaft 54 of the corresponding electric motor 51, a plurality of planetary gears 56 meshed with the sun gear 55, the ring gear 57 meshed with a group of the planetary gears 56, and a carrier 58 rotatably supporting the group of the planetary gears 56 on the same circumference to drive the front-wheel differential output shaft 59.

Sun-gear shafts 55a, 55b are integrally formed at a rotation center part of both side surfaces of the sun gear 55. The sun gear shaft 55a facing the inside of the case is hollow and includes a coupling for the motor shaft 54 at its inner peripheral part. The motor cover 20c includes a support portion for the sun gear shaft 55a concentrically with the support portion for the motor shaft 54, and when the motor shaft 54 is connected to the sun gear shaft 55a, the outer peripheral end part of the sun gear shaft 55a is supported by the motor cover 20c.

The sun gear 55 is meshed with a planetary gear 56 group disposed on the carrier 58. The left and right ring gears 57 are supported by the sun gear shaft 55a capable of relative rotation in a state in which internal teeth formed on inner peripheral surfaces thereof are meshed with the planetary gear 56 group from a radially outer side.

At the rotation center parts of the left and right carriers 58, a coupling for rotatably supporting a distal end part of the corresponding motor shaft 54 by bearings and for connecting a front-wheel differential output shaft 59 incapable of relative rotation is provided adjacent to that.

External teeth formed on outer peripheral surfaces of the left and right ring gears 57 are meshed with the power distribution gears 53 disposed at both end parts of the counter shaft 50 all the time so that the power of the internal combustion engine side from the input shaft 49 is also input.

During a switching operation of the switching mechanism 47 to the "front-wheel only drive" position, the front-wheel output shaft 46 and the front-wheel propeller shaft 48 are disconnected from each other, and the input shaft 49 is held non-rotatable and thus, a state in which the ring gears 57 of the left and right planetary gear mechanisms 52 meshed with the power distribution gears 53 are also restricted non-rotatably is maintained. Therefore, when the electric motors 51 are driven in this state, only the rotation power of the corresponding electric motor 51 is transmitted to the left and right planetary gear mechanisms 52 via each of the sun gears 55, and the left and right front wheels 3 are driven only by the rotation power. In this case, even without driving the internal combustion engine 5, the tractor 1 can be moved only by the both left and right electric motors 51. However, since the capacity of the electric motor 51 is only enough to rotate the front wheels 3 of the tractor 1, damage to the electric motor 51 is avoided at the "front wheel only drive" position, which is effective for traveling in a short time and a short distance, for example, when changing a parking place indoors. It is to be noted that traveling time and a traveling distance are measured at the "front-wheel only drive" position, and when the value exceeds a threshold value, a controller 70, which will be described later, preferably controls to issue an alarm or to stop power feed to the electric motor 51.

When the switching mechanism 47 is at the "four-wheel drive" position, the rotation power from the internal combustion engine 5 is transmitted from the front-wheel output shaft 46 to the counter shaft 50 in the front axle case 20 via the input shaft 49, and each of the ring gears 57 of the left and right planetary gear mechanisms 52 is simultaneously driven at a constant rotation. When the left and right electric motors 51 drive the respective sun gears 55 in this state, the rotation power of the both gears 53, 55 are synthesized by the respective planetary gear mechanisms 52, and the synthesized power is output from the carrier 58 so as to drive the left and right front wheels 3.

The rear wheels 4 are driven by the internal combustion engine 5.

When the switching mechanism 47 is at the "rear-wheel only drive" position, the rotation power from the internal combustion engine 5 is not transmitted to the counter shaft 50 in the front axle case 20 or does not restrict the counter shaft 50 and the ring gear 57 non-rotatably, either. In this case, when the ring gear 57 becomes free, the transmission function by the planetary gear mechanism 52 is lost regardless of a cogging torque of the electric motor 51. As a result, the left and right front wheels 3 idle. The left and right rear wheels 4 are driven only by the rotation power from the internal combustion engine 5.

In the embodiment, the left and right planetary gear mechanisms 52 are configured to be capable of rotating and driving the left and right front wheels 3 by synthesizing the rotation power from the internal combustion engine 5 and the rotation power of the left and right electric motors 51. That is, each of the planetary gear mechanisms 52 of the embodiment is that of an output-coupled (input-split) type. In each of the planetary gear mechanisms 52, the sun gear 55 fixed to the motor shaft 54 of the electric motor 51 corresponds to a first element. The carrier 58 connected to the front-wheel differential output shaft 59 for transmitting the rotation power to the left and right front wheels 3 corresponds to a second element. The ring gear 57 to which the power of the internal combustion engine 5 is transmitted corresponds to a third element. Which of the internal combustion engine 5, the electric motor 51, and the front wheels 3 is combined with each of the elements (the sun gear 55, the carrier 58, and the ring gear 57) of the left and right planetary gear mechanisms 52 is not limited to that of the embodiment, and various combinations may be adopted.

As shown in FIG. 2, a PTO input shaft 64 is connected to the transmission input shaft 33 in the transmission case 11 via a PTO clutch 63 for connecting and disconnecting power. The PTO shaft 32 extending in parallel to the PTO input shaft 64 is rotatably supported. When the PTO shift lever 17 located in the periphery of the driving seat 9 is operated to shift to a position other than the neutral position, the PTO clutch 63 is brought into a power connected state, and the transmission input shaft 33 and the PTO input shaft 64 are connected to each other, incapable of relative rotation.

Between the PTO input shaft 64 and the PTO shaft 32, low-speed gear trains 66, 68 and high-speed gear trains 65, 67 are disposed in parallel, and by causing a shift clutch 69 to slide and move along the PTO shaft 32, the rotation power via the low-speed gear trains 66, 68 or the high-speed gear trains 65, 67 is selectively transmitted to the PTO shaft 32.

As shown in FIGS. 1 and 2, the controller 70 (control device) that manages various controls of the electric motor 51 and the clutch actuator 47b is mounted on the traveling machine body 2.

The controller 70 of the embodiment is disposed in the vicinity of the steering column 6 in the bonnet 8. A disposed spot of the controller 70 is not particularly limited and may be disposed below the driving seat 9 or the like, for example. It is to be noted that, though details are omitted, the controller 70 includes a CPU that executes various types of arithmetic processing and controls, storing means such as EPROM and a flash memory, a RAM for temporarily storing control programs and data, a communication interface (I/F) and the like.

The controller 70 is electrically connected to a steering potentiometer 71 for detecting a rotational-movement operation amount (steering angle) of the steering wheel 7, a switching potentiometer 72 for detecting an operation position of the four-wheel drive switching lever 16, a speed-change potentiometer for detecting an operation position of the main speed-change pedal, a sensor for detecting an output-side rotation state of the traveling transmission mechanism 10, a sensor for detecting a rotation state of the front-wheel differential output shaft 59, the clutch actuator 47b of the switching mechanism 47, and the left and right electric motors 51. The left and right electric motors 51 are electrically connected to the controller 70 via an inverter 73. The inverter 73 is also electrically connected to the battery 28, which is power storage means. To the controller 70, electric power is supplied from the battery 28 via a key switch 74. The battery 28 is electrically connected to the alternator 23 (generator), which generates electricity during the operation of the internal combustion engine 5, via a converter 75. The electricity generated by the alternator 23 is charged in the battery 28.

The controller 70 drives the electric motors 51, 51 in the following manner. (1) When the switching potentiometer 72 detects the "four-wheel drive" position; and (1-1) when the steering potentiometer 71 detects the "straight traveling" state of the steering wheel 7, each of the left and right electric motors 51, 51 is driven at a rotation speed synchronized with output-side rotation of the traveling transmission mechanism 10. As a result, during the traveling, the front wheel 3 rotates without being dragged by the rear wheel 4 and can exert a traction force.
(1-2) When the steering potentiometer 71 detects a "steering" state of the steering wheel 7, with the motor rotation number at the straight traveling immediately before as a reference, the electric motors 51 are differentially driven by making the rotation number of the electric motor 51 on the inner side of turning smaller and making the rotation number of the electric motor 51 on the outer side of turning larger at a rate corresponding to the steering amount. As a result, an ideal inner-wheel difference that does not damage a ground can be realized while maintaining the traction force of the front wheels 3. It is to be noted that, as described above, when it is detected that the brake pedal was operated only on one side, the rotation of the electric motor 51 on the inner side of turning may be controlled to be lower, and the rotation of the electric motor 51 on the outer side of turning may be controlled to be higher in accordance with the depression force.
(2) When the switching potentiometer 72 detects the "front-wheel only drive" position; and (2-1) when the steering potentiometer 71 detects the "straight traveling" state of the steering wheel 7, the left and right electric motors 51, 51 are driven at the same rotation number in accordance with a detected value of the speed-change potentiometer in a state where the upper limit rotation number is limited to a low speed side.
(2-2) When the steering potentiometer 71 detects the "steering" state of the steering wheel 7, with the motor rotation number at the straight traveling immediately before as a reference, the electric motors 51 are differentially driven by making the rotation number of the electric motor 51 on the inner side of turning smaller and making the rotation number of the electric motor 51 on the outer side of turning larger at a rate corresponding to the steering amount.
(3) When the switching potentiometer 72 detects the "rear-wheel only drive" position, power feed to the left and right electric motors 51, 51 is stopped.

Subsequently, a structure of the front axle case 20 and its periphery will be explained with reference to FIGS. 4 to 6. The front axle case 20 is attached to a pair of front and rear support brackets 76 fastened to the front frame 19 via front and rear pivot members 77, 78 so that each of the front wheels 3 can swing (roll) up and down with an intermediate part in the vehicle width direction as a center of rotational movement. When a difference is generated in a ground-contact pressure between the both left and right front wheels 3, the front axle case 20 rotationally moves up and down around the laterally intermediate part, and the left and right front wheels 3 elevate up and down in directions opposite to each other. As a result, the ground-contact pressures of the both left and right front wheels 3 are maintained substantially equal.

The front axle case 20 has a hollow shape, which is elongated to left and right. As described above, the counter shaft 50, the pair of left and right electric motors 51, the pair of left and right planetary gear mechanisms 52, the front-wheel differential output shaft 59 and the like are accommodated inside the front axle case 20. A fixed gear case 79 for supporting an upper end of a king pin 60 faced in an up-down direction by bearings is mounted on each of the both left and right end sides of the front axle case 20. A steering gear case 80 for supporting a lower end of the king pin 60 by bearings is mounted on a lower end of the fixed gear case 79 so as to be capable of rotational movement around the king pin 60. A laterally facing front axle 62 is rotatably supported by the left and right steering gear cases 80. The front wheels 3 are removably attached to parts in the front axle 62 that protrude outward to the left and right from the steering gear case 80. Although not shown, a knuckle arm is attached to each of the steering gear cases 80 and is mechanically interlocked with the steering wheel 7.

Each of the left and right front-wheel differential output shafts 59 in the front axle case 20 is interlockingly connected to the upper end side of the king pin 60 via a front bevel-gear mechanism 81. A lower end side of the king pin 60 is interlockingly connected to a front axle 62 via a final gear 61 in the steering gear case 80.

The front pivot member 77 includes a front center pin 82 and a front-center-pin receiving body 83 which are fitted with each other so as to be relatively rotatable. An annular flange 84 protruding radially outward is formed at a base part of the front center pin 82, and with the axis thereof directed in a machine-body front-rear direction, the annular flange 84 is fastened to the front surface of the laterally intermediate part of the front axle case 20 so as to close the common opening 86.

The front-center-pin receiving body 83 is formed with a cylindrical shape to be mounted to cover the front center pin 82 capable of relative rotation, and is fixed to the laterally intermediate part of the front support bracket 76 with an opening directed in the front-rear direction. The front center pin 82 is inserted into the front-center-pin receiving body 83 from the rear side and is supported by bearings.

The rear pivot member 78 includes a rear center pin 90 and a rear-center-pin receiving body 91 which are fitted with each other so as to be relatively rotatable. The cylinder portion 200a which supports the input shaft 49 therein by bearings also serves as the rear center pin 90, and the centers of the front center pin 82 and the rear center pin 90 are matched with respect to an axis of the cylinder portion 200a along the machine-body front-rear direction.

The rear-center-pin receiving body 91 is formed with a cylindrical shape to cover and to support the rear center pin 90 by bearings, capable of relative rotation, and is fixed to the laterally intermediate part of the rear support bracket 76 with an opening directed in the front-rear direction. The rear center pin 90 is inserted into the rear-center-pin receiving body 91 from the front side, to be capable of relative rotation. In a state where the rear center pin 90 is inserted into the rear-center-pin receiving body 91, a rear cover body 92 is mounted to cover the rear end sides of the rear center pin 90 and the rear-center-pin receiving body 91 (the rear pivot support member 78). The rear cover body 92 is removably mounted on the rear surface of the rear support bracket 76 so as to close the rear openings of the rear center pin 90 and the rear-center-pin receiving body 91, thereby limiting the axial movement of the rear center pin 90. Moreover, the rear cover body 92 supports the input shaft 49 by bearings at a part that closes the rear opening of the cylindrical portion 200a (rear center pin 90).

The front and rear center pins 82, 90 are located concentrically with each other and are located at the center in the width direction of the machine body and function as the center of rotational movement of the front axle case 20. The input shaft 49 is also located concentrically with the front and rear center pins 82, 90. A cable outlet 88 of the front cover body 87, a wiring hole 85 of the front center pin 82, and an insertion hole 86 of the front axle case 20 are also located concentrically with the front and rear center pins 82, 90.

The front center pin 82 includes the wiring hole 85 disposed concentrically with the rotation axis thereof, and an inner end of the wiring hole 85 is opened in an end surface of the annular flange 84. In a state where the front center pin 82 is fastened to the front surface of the front axle case 20, the wiring hole 85 of the front center pin 82 communicates with the common opening 86 of the front axle case 20. On the other hand, an outer end of the wiring hole 85 is opened into an internal space 87a of the front cover body 87. The cable outlet 88 is opened in the front cover body 87 so as to face the wiring hole 85. The wiring cables 93 collected in the common opening 86 are drawn out to the outside of the front axle case 20 via the wiring hole 85 of the front center pin 82, the internal space 87a of the front cover body 87, and the cable outlet 88, and are electrically connected to the controller 70 and the inverters 73. Reference numeral 89 denotes a grommet made of an elastic body having a sealing function, which prevents coating of the wiring cable 93 from being damaged by vibration or the like and maintains a liquid-tight state inside the internal space 87a.

Therefore, the wiring cable 93 can be positioned concentrically with the center of rotational movement of the front axle case 20, and even if the front axle case 20 swings up and down (rolls) around the front center pin 82 during traveling, the wiring cable 93 in the front center pin 82 is hardly twisted or repeatedly bent and stretched. Therefore, the wiring cable 93 drawn out of the front axle case 20 in which the electric motor 51 is incorporated can be markedly suppressed from being damaged such as disconnection fatigue.

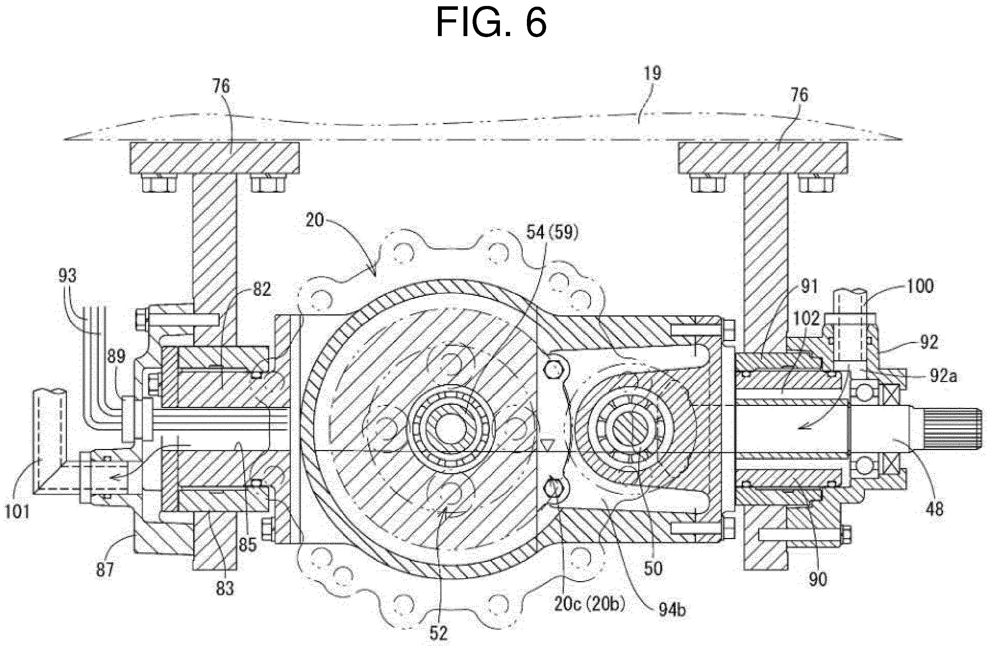

As shown in FIG. 6, oil for lubricating various gears and bearings and for cooling the electric motor 51 is stored in the front axle case 20. A height position of an oil level when the various rotating bodies in the front axle case 20 are stopped is set to such an extent that lower half parts of the left and right motor shafts 54, the front-wheel differential output shaft 59, the counter shaft 50 and the like are in contact with the oil. For this reason, the various rotating bodies in the front axle case 20 do not rotate in a state of being completely immersed under the oil level, and an increase in stirring resistance (increase in power loss) is suppressed.

When the electric motor 51 is cooled by the lubricating oil stored in the front axle case 20, its oil temperature tends to increase. In order to avoid lowering in performance of the electric motor 51 due to the temperature rise of each part of the motor, the rise in the oil temperature needs to be suppressed. Thus, as shown in FIGS. 1, 5 and 6, an oil reservoir in the front axle case 20 is fluidly connected to the oil cooler 27 disposed in the front part of the front frame 19 via a feed piping 100 and a return piping 101. An end of the feed piping 100 connected to a discharge side of the oil cooler 27 is mounted on the rear cover body 92 of the rear support bracket 76 and is connected in communication with the oil reservoir chamber 92a. The oil reservoir chamber 92a is connected in communication with the gear accommodating chamber 94b in the front axle case 20 through a supply oil passage 102 also used by the rear center pin 90 to insert and support the input shaft 49. An end of the return piping 101 connected to a suction side of the oil cooler 27 is mounted on the front cover body 87 of the front support bracket 76 and is connected in communication with the internal space 87a.

Since the feed piping 100 and the return piping 101 can be fixed to the rear cover body 92 and the front cover body 87 without being bent and extended when the front axle case 20 swings, a rigid pipe material such as a durable metal can be used.

The oil is fed from the oil cooler 27 to the gear accommodating chamber 94b in the front axle case 20 via the feed piping 100, the rear cover body 92, and the supply oil path 102 of the rear center pin 90. In a hydraulic fluid in the front axle case 20, the hydraulic fluid that has entered the motor accommodating chamber 94a from the rear communication port 95 and the left and right side communication ports 96 oil-cools the left and right electric motors 51 and then, it is returned to the oil cooler 27 via the common opening 86 in the front part of the front axle case 20, the wiring hole 85, the front cover body 87, and the return piping 101. As described above, the lubricating oil in the front axle case 20 cools the left and right electric motors 51 and then, moves to the oil cooler 27 to be cooled and then, is introduced into the front axle case 20 again to be circulated. Therefore, an amount of the lubricating oil in the front axle case 20 can be maintained at a predetermined amount all the time, and the temperature of the lubricating oil can be maintained at an appropriate temperature for the electric motor 51.

According to the above configuration, the sun gear 55, which is the first element of the three elements of each of the planetary gear mechanisms 52, is interlockingly connected to the corresponding left and right electric motors 51, the carrier 58, which is the second element, is interlockingly connected to the corresponding left and right auxiliary drive (front) wheels 3, and the ring gear 57, which is the third element, is interlockingly connected to the output side of the traveling transmission mechanism for driving the main drive (rear) wheels 4 by the internal combustion engine 5 and thus, in rotating and driving the left and right front wheels 3, drive loads can be shared by the internal combustion engine 5 and the left and right electric motors 51. Thus, each of the electric motors 51 can be downsized so as to achieve reduction in size and weight. For example, a relationship of the outputs between the electric motors 51 and the internal combustion engine 5 is set to 3:7 or 2:8 in accordance with front-rear weight distribution of the vehicle body, and the both left and right electric motors 51 can be downsized by independently driving each of the left and right front wheels 3, 3 by using a pair of the electric motors 51. Since the left and right electric motors 51 are driven independently of each other, rotation of the left and right front wheels 3 can be finely controlled, and, for example, a turning radius can be made smaller than before, and the straight traveling performance can be improved.

On the lower side of the front part of the traveling machine body 2, the front axle case 20 swingable around the center pins 82, 90 located at the laterally intermediate part is provided, the front wheels 3 as the drive wheels are provided at the both left and right end parts of the front axle case 20, and the left and right front wheels 3 can move in the vertical direction depending on the unevenness of the road surface. The pair of electric motors 51 are accommodated in the front axle case 20 by being distributed to both the left and right sides with the center pins 82, 90 interposed therebetween and thus, the electric motors 51 capable of size reduction can be accommodated in the front axle case 20 with a good balance. The front axle case 20 smoothly swings in the traveling on a bad road or the like so as to realize stable traveling.

The wiring hole 85 communicating with the inside and outside of the front axle case 20 is formed inside the center pins 82, 90, and the wiring cable 93 for the respective electric motors 51 is drawn out to the outside of the front axle case 20 through the wiring hole 85 and thus, the wiring cable 93 for each of the electric motors 51 can be disposed concentrically with the swing center of the front axle case 20. Thus, even if the front axle case 20 swings up and down (rolls), the wiring cable 93 is hardly twisted and is not bent and stretched, so that the concern of damage such as disconnection can be markedly suppressed.

Since the oil is stored in the axle case, and the front axle case is connected to the oil cooler 27 mounted on the traveling machine body 2 so that the stored oil can flow freely via the through hole of the center pin, when the front axle case 20 swings, the connection piping (feed and return pipings 100, 101) is not bent and stretched and thus, a connection piping made of a rigid material with durability can be used.

The traveling machine body 2 is supported by the both left and right front wheels 3 and the both left and right rear wheels 4, and the switching mechanism 47 for switching the drive form of the front and rear wheels 3, 4 to the front-wheel drive, the four-wheel drive, and the rear-wheel drive is accommodated in the transmission case 11, and it is configured such that, when the switching mechanism 47 is switched to the front-wheel drive position, the ring gear 57, which is the third element of the both left and right planetary gear mechanisms 52, is fixed to the transmission case 11 and is brought into a breaking state, the drive of the both left and right electric motors 51 is transmitted via the sun gears of the both left and right planetary gear mechanisms 52, and the both left and right front wheels 3 are rotated and driven and thus, only by the switching operation of the switching mechanism 47 to the front-wheel drive position, the traveling only by the front-wheel drive by the both left and right electric motors 51 is made possible.

It is to be noted that the present invention is not limited to the above-described embodiment, and can be embodied in various forms. For example, the present invention is not limited to the tractor, but can be applied to various work vehicles such as agricultural implements such as a rice planter and a combine harvester, and special work vehicles such as a wheel loader. In addition, the configuration of each component is not limited to the illustrated embodiments, and various changes can be made in a range not departing from the scope of the claims.

### REFERENCE SIGNS LIST

- 1: Tractor
- 2: Traveling machine body
- 3: Front wheel
- 4: Rear wheel
- 5: Internal combustion engine
- 11: Transmission case
- 16: Drive switching lever
- 20: Front axle case
- 23: Alternator
- 27: Oil cooler
- 28: Battery
- 30: Flywheel housing
- 30a: Housing claw portion
- 31: Rear axle case
- 46: Front-wheel output shaft
- 47: Switching mechanism
- 47a: Clutch shifter
- 47b: Clutch actuator
- 47c: Shifter claw portion
- 48: Front-wheel propeller shaft
- 50: Counter shaft
- 51: Electric motor
- 52: Planetary gear mechanism
- 54: Motor shaft
- 55: Sun gear
- 56: Planetary gear
- 57: Ring gear
- 58: Carrier
- 59: Front-wheel differential output shaft
- 76: Support bracket
- 77: Front pivot member
- 78: Rear pivot member
- 82: Front center pin
- 83: Front-center-pin receiving body
- 84: Annular flange
- 85: Wiring hole
- 86: Common opening
- 90: Rear center pin
- 91: Rear-center-pin receiving body
- 92: Rear cover body
- 93: Wiring cable
- 94a: Motor accommodating chamber
- 94b: Gear accommodating chamber
- 95: Rear communication port
- 96: Side communication port
- 99: Concentration pocket portion
- 100: Feed piping
- 101: Return piping
- 102: Supply oil path

## Claims

1. A traveling vehicle (1) in which an internal combustion engine (5), a main drive wheel (4), and a pair of sub drive wheels (3) are supported on a traveling machine body (2), and the internal combustion engine (5) drives the main drive wheel (4) through a traveling transmission mechanism (10), the traveling vehicle (1) comprising:
an electric motor (51) and a planetary gear mechanism (52) that are provided inside an axle case (20) that supports the pair of sub drive wheels (3), wherein
in three elements of the planetary gear mechanism (52), a first element is interlockingly connected to the electric motor (51), a second element is interlockingly connected to the pair of sub drive wheels (3), and a third element is interlockingly connected to an output side of the traveling transmission mechanism (10), and wherein
the axle case (20) is supported on the traveling machine body (2), to be swingable around a center pin (82; 90) disposed at an intermediate part in a vehicle width direction, and the pair of sub drive wheels (3) is attached, capable of moving up and down; and
each of a pair of electric motors (51), included in the electric motor (51), and each of a pair of planetary gear mechanisms (52), included in the planetary gear mechanism (52), are accommodated in the axle case (20) by being distributed to both left and right sides with the center pin (82; 90) interposed therebetween.

2. The traveling vehicle (1) according to claim 1, wherein
a through hole that communicates from an inside to an outside of the axle case (20) is formed inside the center pin (82; 90), and a wiring cable (93) for each of the electric motors (51) is drawn out to the outside of the axle case (20) via the through hole.

3. The traveling vehicle (1) according to claim 2, wherein
oil is stored in the axle case (20), and the axle case (20) is connected to an oil cooler (27) mounted on the traveling machine body (2) such that the stored oil flows freely via the through hole of the center pin (82; 90).

4. The traveling vehicle (1) according to claim 1, comprising:
a power take-out portion for the pair of sub drive wheels (3), which is provided on an output side of the traveling transmission mechanism (10), wherein
the power take-out portion includes a switching mechanism (47) that switches a drive form of the main drive wheel (4) and the pair of sub drive wheels (3) among drive forms which drive only the pair of sub drive wheels (3), drive all-wheel, and drive only the main drive wheel (4); and
when the switching mechanism (47) is switched to the driving state which drives only the pair of sub drive wheels (3), power transmission from the traveling transmission mechanism (10) to the third element of the planetary gear mechanism (52) is disconnected in a braking state, and the pair of sub drive wheels (3) is rotated and driven by drive of the electric motors (51).

5. The traveling vehicle (1) according to claim 1, wherein
the pair of sub drive wheels (3) are steerable by an operation of an operator, and a control device (70) of the electric motors (51) is configured to cause
the pair of sub drive wheels (3) to be differentially driven on the basis of a steering signal of the control device (70).

## Patentansprüche

1. Selbstfahrendes Fahrzeug (1), bei dem ein Verbrennungsmotor (5), ein Hauptantriebsrad (4) und ein Paar Nebenantriebsräder (3) an einer Fahrzeugkarosserie (2) gestützt sind und der Verbrennungsmotor (5) das Hauptantriebsrad (4) über einen Fahrgetriebemechanismus (10) antreibt, wobei das selbstfahrende Fahrzeug (1) umfasst:
einen Elektromotor (51) und einen Planetengetriebemechanismus (52), die innerhalb eines Achsgehäuses (20), das das Paar Nebenantriebsräder (3) stützt, bereitgestellt sind, wobei
in drei Elementen des Planetengetriebemechanismus (52) ein erstes Element mit dem Elektromotor (51) in verblockendem Eingriff steht, ein zweites Element mit dem Paar Nebenantriebsräder (3) in verblockendem Eingriff steht, und ein drittes Element mit einer Abtriebsseite des Fahrgetriebemechanismus (10) in verblockendem Eingriff steht, und wobei
das Achsgehäuse (20) an der Fahrzeugkarosserie (2) so gestützt ist, dass es um einen Mittelbolzen (82; 90), der an einem Zwischenteil angeordnet ist, in einer Fahrzeugbreitenrichtung schwenkbar ist, und das Paar Nebenantriebsräder (3) so angebracht ist, dass es zu einer Auf- und Abbewegung befähigt ist; und
jeder eines Paares von Elektromotoren (51), die in dem Elektromotor (51) enthalten sind, und jeder eines Paares von Planetengetriebemechanismen (52), die in dem Planetengetriebemechanismus (52) enthalten sind, in dem Achsgehäuse (20) aufgenommen sind, indem sie sowohl auf die linke als auch auf die rechte Seite verteilt sind, wobei der Mittelbolzen (82; 90) dazwischen angeordnet ist.

2. Selbstfahrendes Fahrzeug (1) nach Anspruch 1, wobei
ein Durchgangsloch, das von einer Innenseite zu einer Außenseite des Achsgehäuses (20) kommuniziert, innerhalb des Mittelbolzens (82; 90) gebildet ist, und ein Verdrahtungskabel (93) für jeden der Elektromotoren (51) über das Durchgangsloch zur Außenseite des Achsgehäuses (20) herausgeführt ist.

3. Selbstfahrendes Fahrzeug (1) nach Anspruch 2, wobei
Öl in dem Achsgehäuse (20) gespeichert ist und das Achsgehäuse (20) mit einem Ölkühler (27) verbunden ist, der an der Fahrzeugkarosserie (2) montiert ist, dergestalt, dass das gespeicherte Öl frei über das Durchgangsloch des Mittelbolzens (82; 90) fließt.

4. Selbstfahrendes Fahrzeug (1) nach Anspruch 1, umfassend:
einen Kraftabgreifabschnitt für das Paar Nebenantriebsräder (3), der auf einer Abtriebsseite des Fahrgetriebemechanismus (10) bereitgestellt ist, wobei
der Kraftabgreifabschnitt einen Schaltmechanismus (47) aufweist, der eine Antriebsform des Hauptantriebsrades (4) und des Paares von Nebenantriebsrädern (3) zwischen Antriebsformen umschaltet, die nur das Paar Nebenantriebsräder (3) antreiben, alle Räder antreiben und nur das Hauptantriebsrad (4) antreiben; und
wenn der Schaltmechanismus (47) in den Antriebszustand geschaltet ist, der nur das Paar Nebenantriebsräder (3) antreibt, eine Kraftübertragung von dem Fahrgetriebemechanismus (10) zu dem dritten Element des Planetengetriebemechanismus (52) in einem Bremszustand getrennt ist und das Paar Nebenantriebsräder (3) durch den Antrieb der Elektromotoren (51) gedreht und angetrieben wird.

5. Selbstfahrendes Fahrzeug (1) nach Anspruch 1, wobei
das Paar Nebenantriebsräder (3) durch eine Betätigung eines Bedieners lenkbar ist und eine Steuervorrichtung (70) der Elektromotoren (51) dazu eingerichtet ist zu veranlassen, dass das Paar Nebenantriebsräder (3) auf der Grundlage eines Lenksignals der Steuervorrichtung (70) differenziell angetrieben wird.

## Revendications

1. Véhicule automoteur (1) dans lequel un moteur à combustion interne (5), une roue motrice principale (4) et une paire de roues motrices secondaires (3) sont supportés sur un châssis de véhicule (2), et le moteur à combustion interne (5) entraîne la roue motrice principale (4) par l'intermédiaire d'un mécanisme de transmission de mouvement (10), le véhicule automoteur (1) comprenant :
un moteur électrique (51) et un mécanisme à engrenages planétaires (52) qui sont agencés à l'intérieur d'un carter d'essieu (20) qui supporte la paire de roues motrices secondaires (3), dans lequel
dans trois éléments du mécanisme à engrenages planétaires (52), un premier élément est relié par crabotage au moteur électrique (51), un deuxième élément est relié par crabotage à la paire de roues motrices secondaires (3), et un troisième élément est relié par crabotage à un côté de sortie du mécanisme de transmission de mouvement (10), et dans lequel
le carter d'essieu (20) est supporté sur le châssis de véhicule (2), de manière à pouvoir pivoter autour d'un pivot central (82 ; 90) disposé sur une partie intermédiaire dans une direction de largeur de véhicule, et la paire de roues motrices secondaires (3) est rapportée, capable de se déplacer vers le haut et vers le bas ; et
chacun d'une paire de moteurs électriques (51), inclus dans le moteur électrique (51), et chacun d'une paire de mécanismes à engrenages planétaires (52), inclus dans le mécanisme à engrenages planétaires (52), sont logés dans le carter d'essieu (20) en étant répartis des deux côtés gauche et droit avec le pivot central (82 ; 90) interposé entre ceux-ci.

2. Véhicule automoteur (1) selon la revendication 1, dans lequel
un trou traversant qui communique d'un intérieur à un extérieur du carter d'essieu (20) est formé à l'intérieur du pivot central (82 ; 90), et un fil de câblage (93) pour chacun des moteurs électriques (51) est tiré vers l'extérieur du carter d'essieu (20) via le trou traversant.

3. Véhicule automoteur (1) selon la revendication 2, dans lequel
de l'huile est stockée dans le carter d'essieu (20), et le carter d'essieu (20) est relié à un refroidisseur d'huile (27) monté sur le châssis de véhicule (2) de telle sorte que l'huile stockée s'écoule librement via le trou traversant du pivot central (82 ; 90).

4. Véhicule automoteur (1) selon la revendication 1, comprenant :
une portion de prise de force pour la paire de roues motrices secondaires (3), qui est agencée sur un côté de sortie du mécanisme de transmission de déplacement (10), dans lequel
la portion de prise de force comporte un mécanisme de basculement (47) qui bascule une forme d'entraînement de la roue motrice principale (4) et de la paire de roues motrices secondaires (3) entre des formes d'entraînement qui entraînent uniquement la paire de roues motrices secondaires (3), entraînent toutes les roues et entraînent uniquement la roue motrice principale (4) ; et
lorsque le mécanisme de commutation (47) est basculé sur l'état d'entraînement qui entraîne uniquement la paire de roues motrices secondaires (3), une transmission de puissance du mécanisme de transmission de mouvement (10) au troisième élément du mécanisme à engrenages planétaires (52) est déconnectée dans un état de freinage, et la paire de roues motrices secondaires (3) est en rotation et entraînée par l'entraînement des moteurs électriques (51).

5. Véhicule automoteur (1) selon la revendication 1, dans lequel
la paire de roues motrices secondaires (3) peut être dirigée par une manœuvre d'un opérateur, et un dispositif de commande (70) des moteurs électriques (51) est configuré pour amener la paire de roues motrices secondaires (3) à être entraîner de manière différentielle sur la base d'un signal de direction du dispositif de commande (70).
